# EUROPÄISCHE PATENTSCHRIFT

(11) **EP 1 559 953 B1**
(45) Veröffentlichungstag und Bekanntmachung des Hinweises auf die Patenterteilung: **25.03.2009**
(21) Anmeldenummer: 05001379.6
(22) Anmeldetag: 25.01.2005
(51) Int. Cl.: F22B 1/18, F22B 37/06, F28F 9/02, C10J 3/86

(54) **Vorrichtung für den Eintritt von Heissgas in ein Heizflächenrohr eines Abhitzekessels**
Device for introducing hot gas into a heating tube of a waste heat boiler
Dispositif pour introduire des gaz chauds dans un tube chauffant d'une chaudière de récupération

(30) Priorität: 30.01.2004 DE 102004004999
(43) Veröffentlichungstag der Anmeldung: 03.08.2005
(73) Patentinhaber: ALSTOM Power Energy Recovery GmbH, 34123 Kassel (DE)
(72) Erfinder: Schötz, Michael, 51375 Leverkusen (DE)

(56) Entgegenhaltungen:
- DE-A1- 1 751 085
- US-A- 4 445 463

## Beschreibung

Die Erfindung bezieht sich auf eine Vorrichtung für den Eintritt von Heißgas in ein Heizflächenrohr eines Abhitzekessels mit einem mit der Kesselwandung, insbesondere mit dem Rohrboden, verbundenen Außenrohr, einem an dem Außenrohr über eine abgerundete Umkehrkappe unter Ausbildung einer Eintrittsöffnung für das Heißgas anschließenden und von dem Außenrohr mit Abstand umschlossenen Innen- bzw. Eintrittsrohr mit Einströmabschnitt und einem mit dem Heizflächenrohr verbundenen Abströmabschnitt und mit einem zwischen Außenrohr und Innenrohr angeordneten Kühlmittel - Leitrohr, das sich bis in die Nähe der Umkehrkappe erstreckt.

In Abhitzekesseln bzw. Wärmetauschern werden Heißgase (wie z.B. Synthesegase aus partiellen Oxidationsanlagen) durch Kühlmittel abgekühlt und dabei in den häufigsten Fällen Dampf erzeugt. Die Wärmetauscher bestehen vorzugsweise aus mehreren parallel geschalteten geraden oder gebogenen bzw. gewendelten Heizflächensystemen, die aus einer Vielzahl von Heizflächenrohren gebildet sind.

Bei Wärmetauschern bzw. Abhitzekesseln, die mit gattungsgemäßen Vorrichtungen für den Eintritt von Heißgas in deren Heizflächenrohre ausgebildet sind, hat sich gezeigt, dass die geometrische Ausführung des Gaseintrittes im Hinblick auf den realen sowie dem potentiellen Korrosionsangriff sowie im Hinblick auf die im Betrieb auftretende Verstopfungsneigung des Gaseintrittes unvorteilhaft ausgebildet ist. Insbesondere der Bereich des Überganges vom konischen Innen- bzw. Eintrittsrohr zum nachgeschalteten geraden bzw. zylindrischen Eintrittsrohr unterliegt dieser Problematik. Es hat sich gezeigt, dass die beschriebenen Mechanismen zu einer extrem kurzen Lebensdauer der Bauteile führen, die durch einen beispielsweise kombinierten Erosions- und Korrosionsprozess ausgelöst werden.

Aus der Druckschrift "Verfahrenstechnik: Anlagen- und Apparatebau, Komponenten und Teilkreisläufe" (1986), Seite 19 der Fa. L. & C. Steinmüller ist eine Vorrichtung der gattungsgemäßen Art bekannt. Diese bekannte Vorrichtung weist ein Eintritts- bzw. Innenrohr auf, dass mit knapp 10° konisch verengend auf das daran anschließende zylindrische Innenrohr zuläuft.

Durch Druckschriften DE 198 22 546 C1 sowie DE 101 38 626 A1 und US-A-4 445 463 sind weitere gattungsgemäße Vorrichtungen für den Eintritt von Heißgas in ein Heizflächenrohr eines Abhitzekessels bekannt geworden. Die durch diese Schriften bekannt gewordenen gattungsgemäßen Vorrichtungen weisen ebenfalls einen konisch zulaufenden Einströmabschnitt und einen geradzylindrischen Abströmabschnitt des Eintritts- bzw. Innenrohres auf.

Es ist die Aufgabe der vorliegenden Erfindung, eine Vorrichtung für den Eintritt von Heißgas in ein Heizflächenrohr eines Abhitzekessels zu schaffen, die die vorgenannten Nachteile vermeidet. Insbesondere soll eine Vorrichtung geschaffen werden, die es erlaubt,
- hinsichtlich der Korrosionsmechanismen kritische Bauteile möglichst strömungsoptimiert zu gestalten, so dass Oberflächentemperaturen reduziert und somit der Korrosionsangriff vermieden werden kann,
- hinsichtlich der Verblockungsneigung kritische Bauteile möglichst strömungsoptimiert zu gestalten, so dass das Risiko von Verblockungen reduziert werden kann.

Die vorstehend genannte Aufgabe wird durch die kennzeichnenden Merkmale des Patentanspruches 1 gelöst.

Vorteilhafte Ausgestaltungen der Erfindung sind den Unteransprüchen zu entnehmen.

Durch die erfindungsgemäße Lösung wird eine Vorrichtung für den Eintritt von Heißgas in ein Heizflächenrohr eines Abhitzekessels geschaffen, die die nachfolgenden Vorteile aufweist:
- Der verfahrenstechnisch ungünstige Übergang innerhalb des Eintrittrohres von Konus auf Zylinder wird vermieden, respektive auf einen Bereich innerhalb des Eintrittrohres verlegt, in dem das heiße Gas schon wesentlich abgekühlt ist und somit die Neigung zu Korrosion und Verblocken erheblich reduziert ist.
- Die Lebensdauer der entsprechenden Komponenten wird erhöht.
- Die Möglichkeit der Erosion wird reduziert.
- Es kann mit Hilfe von zwei oder mehreren Konizitäten wesentlich differenzierter auf den Durchströmungsquerschnittbedarfes des im konischen Bereich abgekühlten bzw. abzukühlenden Gases eingegangen werden.

Bei einer besonders vorteilhaften Ausgestaltung der Erfindung beträgt der Winkel des Konusses bzw. der Konusse des konisch ausgebildeten Eintritts- bzw. Innenrohres weniger als 1°. Damit können die oben angeführten vorteilhaften Eigenschaften der vorliegenden Erfindung nochmals optimiert werden.

Bei Ausbildung des konischen Bereiches des Eintrittrohres mit zwei oder mehreren Konizitäten, d.h. Winkeln, weist in vorteilhafter Weise der zuerst durchströmte bzw. der stromaufwärtige Bereich des konischen Bereiches eine geringere Konizität auf als der anschließend durchströmte bzw. stromabwärtige Bereich. Durch diese Maßnahme kann ganz wesentlich die Korrosions- und Blockageneigung beeinflusst bzw. verringert werden, da das Heißgas zuerst auf einer Strecke mit geringer Konizität stark abgekühlt werden kann, die gasseitige Strömungsgeschwindigkeit jedoch gegenüber einem rein zylindrischen Eintrittsrohr weiter beschleunigt wird, was den Selbstreinigungseffekt im Eintrittsrohr erhöht.

In zweckmäßiger Ausbildung der Erfindung ist der restliche Teil des Abströmabschnittes des Eintrittrohres zylindrisch bzw. geradzylindrisch ausgeführt. Diese Anordnung zieht fertigungsseitige Vorteile nach sich.

In vorteilhafter Weise ist die Gaseintrittsöffnung des Eintrittsrohres torus- bzw. trompetenförmig aufgeweitet, um durch diese Maßnahme die Effizienz des Gaseintrittes in die Vorrichtung zu erhöhen.

Durch die vorteilhafte Ausbildung der gasseitigen Wandoberfläche der Umkehrkappe sowie der gasseitigen Wandoberfläche des Einströmabschnittes und/oder des Abströmabschnittes des Eintrittrohres mit einer verschleiß- und korrosionsbeständigen Keramikbeschichtung oder einer Diffusionsbeschichtung oder einer Plattierung, z.B. einer Schweißplattierung, kann die Standzeit bzw. Lebensdauer der Heizflächenrohre nochmals wesentlich erhöht werden.

Bei einer vorteilhaften Ausgestaltung der Erfindung ist die Umkehrkappe und/oder das Eintrittsrohr aus einem geschmiedeten oder gegossenen Stück gefertigt. Durch diese Maßnahme wird gegenüber dem herkömmlichen Bauteil die Fertigung wesentlich erleichtert und infolgedessen die Bauteilkosten reduziert.

Es zeigt:
- Fig. 1: einen vertikalen Teilschnitt durch eine Ausführungsform der erfindungsgemäßen Vorrichtung, (ein ähnlicher Teilschnitt ist aus dem Bild "Gekühlter konischer Eintrittsbereich in die Heizflächenrohre" auf S. 19, oben der angezogenen Druckschrift "Verfahrenstechnik: Anlagen- und Apparatebau, Komponenten und Teilkreisläufe" entnehmbar),
- Fig. 2: eine alternative Ausführung des Eintrittrohres der erfindungsgemäßen Vorrichtung.

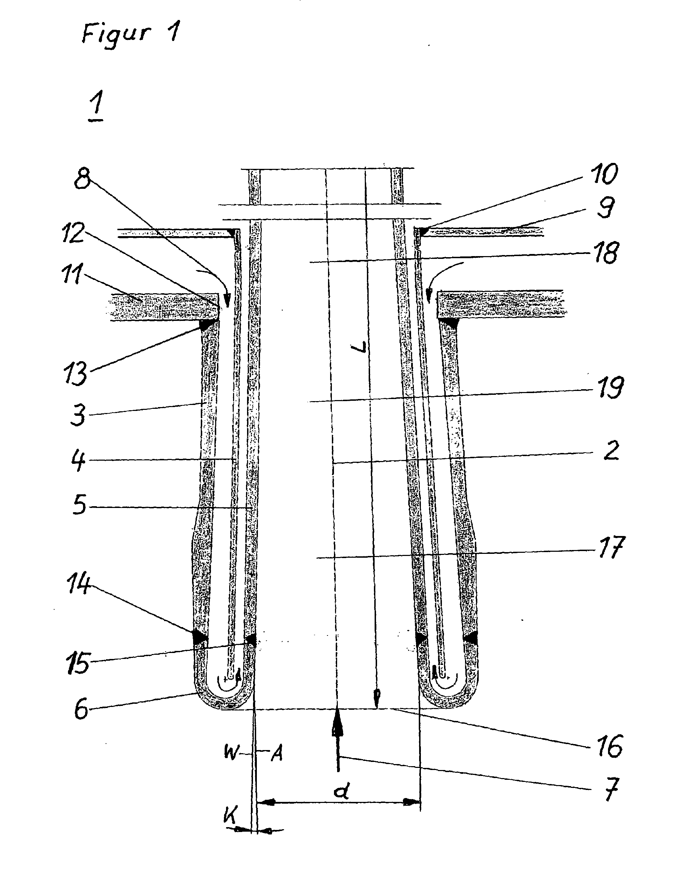

Wie bei der in der Druckschrift, Seite 19 angesprochenen Figur ist in der dargestellten Figur 1 von dem Abhitzekessel nur ein Teil der Behälterwandung, und zwar der Rohrboden 11 dargestellt, mit dem im Bereich einer Bohrung 12 eine Vorrichtung 1 für den Eintritt des Heißgases 7 in ein nicht dargestelltes Heizflächenrohr des Abhitzekessels mittels einer Schweißung 13 verbunden ist. Zu der Vorrichtung 1 gehört ein Außenrohr 3 und ein von dem Außenrohr 3 umgebendes Innen- bzw. Eintrittsrohr 5, die über eine abgerundete Umkehrkappe 6 miteinander verbunden sind. Bei der in Figur 1 dargestellten Ausführungsform ist die Umkehrkappe 6 - sie bewirkt eine im wesentlichen 180 ° Umlenkung des Kühlmittels 8 innerhalb der Vorrichtung 1 - als ein Teil ausgebildet, der im Umkehrbereich der Vorrichtung 1 liegt und mittels Schweißung 14 mit dem Außenrohr 3 und mittels Schweißung 15 mit dem Innenrohr 5 verbunden ist. Die Umkehrkappe 6 bestimmt eine Gaseintrittsöffnung 16 in das Innen- bzw. Eintrittsrohr 5. Das Innen- bzw. Eintrittsrohr 5 weist stromabwärts von der Gaseintrittsöffnung 16 einen Einströmabschnitt 17 auf, der in einen mit dem Heizflächenrohr verbundenen Abströmabschnitt 18 übergeht und durch die das Heißgas 7 strömt. Die räumliche Erstreckung bzw. Anordnung der Vorrichtung 1 für den Eintritt von Heißgas 7 in ein Heizflächenrohr eines Abhitzekessels in deren Längsrichtung 2 definiert sich damit, dass die Vorrichtung 1 sich hinsichtlich der Strömungsrichtung des Heißgases 7 stromaufwärts des nicht dargestellten Heizflächenrohres erstreckt.

Zwischen Außenrohr 3 und Innenrohr 5 ist ein Kühlmittel - Leitrohr 4 angeordnet, dessen eines Ende gemäß der aufgezeigten Ausführungsform mittels einer Verbindung 10, die gemäß Figur 1 eine Schweißung sein kann, mit einem mit der Behälterwandung des Abhitzekessels in Verbindung stehenden Zwischenrohrbodens 9 verbunden ist und dessen freies Ende im Umlenkbereich der Umkehrkappe 6 endet.

Die Vorrichtung 1 für den Eintritt von Heißgas in ein Heizflächenrohr eines Abhitzekessels ist erfindungsgemäß derart ausgebildet, dass der Einströmabschnitt 17 und wenigstens ein Teil des Abströmabschnittes 18 des Eintrittsrohres 5 konisch ausgebildet ist, wobei die Konizität des konischen Bereiches 19 weniger als 2° beträgt und der lichte bzw. freie Querschnitt des konischen Bereiches 19 des Eintrittsrohres 5 sich vom Einströmabschnitt 17 hin zum Abströmabschnitt 18 verringert und die Länge L des konischen Bereiches 19 wenigstens das 4-fache des Innendurchmessers d des Eintrittrohres 5 beträgt und der konische Bereich 19 des Eintrittsrohres 5 mit wenigstens zwei unterschiedlichen Konizitäten, d.h. mit wenigstens zwei unterschiedlichen Winkeln ausgebildet ist. Unter Konizität ist dabei der Winkel K gemeint, der zwischen der konisch ausgebildeten Rohrwand W und der Achsparallelen A gebildet wird (siehe Figur 1). Durch diese erfindungsgemäße Ausbildung der Vorrichtung 1 wird zum einen erreicht, dass der verfahrenstechnisch ungünstige Übergang innerhalb des Eintrittrohres 5 von Konus auf Zylinder vermieden wird bzw. auf einen Bereich innerhalb des Eintrittrohres 5 verlegt wird, in dem das Heißgas 7 schon erheblich abgekühlt ist und somit die Neigung zu Korrosion und Verblocken erheblich reduziert ist. Zum anderen wird der besagte Übergang gegenüber Lösungen gemäß dem Stand der Technik weitestgehend vergleichmäßigt und damit wird die Möglichkeit einer Erosion erheblich reduziert. Als Folge der vorgenannten Vorteile kann ferner eine erhöhte Lebensdauer der entsprechenden Komponenten erzielt werden.

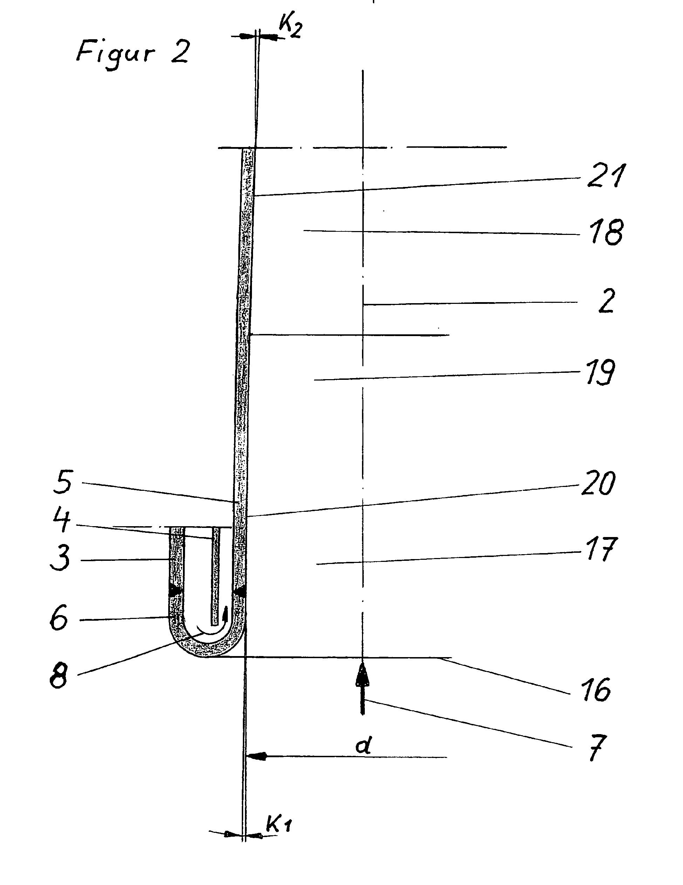

Weist die erfindungsgemäße Vorrichtung 1 beispielsweise zwei Konizitäten auf, so sieht eine vorteilhafte Ausbildung der Erfindung vor, dass die gasströmungsseitig gesehen erste Konizität bzw. der stromaufwärtige Bereich 20 des konischen Bereiches 19 einen Winkel K von beispielsweise 0,75° und die zweite Konizität bzw. der stromabwärtige Bereich 21 des konischen Bereiches 19 einen Winkel K von beispielsweise 1,5° aufweist (siehe Figur 2). Bei einer derartigen Anordnung kann ganz wesentlich die Korrosions- und Blockageneigung beeinflusst bzw. verringert werden, da das Heißgas zuerst auf einer Strecke mit geringster Konizität stark abgekühlt werden kann, bevor es in abgekühlter Form in einen Bereich mit relativ größerer Konizität gelangt.

Die vorgenannten Vorteile können noch optimiert werden, indem der konische Bereich 19 des Eintrittrohres 5 mit einer Konizität (Winkel K) von weniger als 1° ausgebildet wird.

Der restliche bzw. verbleibende Teil des Abströmabschnittes 18 des Eintrittrohres 5 wird vorteilhaft zylindrisch- bzw. geradzylindrisch ausgebildet, um einen einfachen Übergang zu dem nicht dargestellten Heizflächenrohr zu ermöglichen.

Eine alternative und vorteilhafte Ausbildung der Erfindung sieht vor, die gasseitige Wandoberfläche der Umkehrkappe 6, die gasseitige Wandoberfläche des Einströmabschnittes 17 und/oder des Abströmabschnittes 18 des Eintrittsrohres 5 mit einer nicht dargestellten verschleiß- und korrosionsbeständigen Keramikbeschichtung oder einer Diffusionsbeschichtung, beispielsweise Diffusion von Aluminium, oder einer Plattierung, beispielsweise einer Schweißplattierung, auszubilden. Mittels dieser Maßnahme kann die Korrosions- und Erosionsbeständigkeit der Umkehrkappe 6 sowie des Eintrittrohres 5 nochmals optimiert werden.

Ferner kann es von Vorteil sein, die Umkehrkappe 6 und/oder das Eintrittsrohr 5 in geschmiedeter oder gegossener Ausführung auszubilden.

Entgegen der Abbildung gemäß der Figur 1 kann die Gaseintrittsöffnung 16 auch torus- bzw. trompetenförmig aufgeweitet sein, um dadurch die Effizienz des Gaseintrittes in die Vorrichtung 1 gegebenenfalls zu erhöhen.

### Bezugszeichenliste:

- 1: Vorrichtung
- 2: Vorrichtungs - Längsachse
- 3: Außenrohr
- 4: Kühlmittel-Leitrohr
- 5: Innenrohr bzw. Eintrittsrohr
- 6: Umkehrkappe
- 7: Heißgas
- 8: Kühlmittel
- 9: Zwischenrohrboden
- 10: Verbindung bzw. Schweißung
- 11: Rohrboden
- 12: Bohrung
- 13: Schweißung
- 14: Schweißung
- 15: Schweißung
- 16: Gaseintrittsöffnung
- 17: Einströmabschnitt
- 18: Abströmabschnitt
- 19: Konischer Bereich
- 20: Stromaufwärtiger Bereich innerhalb des konischen Bereiches
- 21: Stromabwärtiger Bereich innerhalb des konischen Bereiches

## Patentansprüche

1. Vorrichtung ( 1 ) für den Eintritt von Heißgas in ein Heizflächenrohr eines Abhitzekessels mit einem mit der Kesselwandung, insbesondere mit dem Rohrboden ( 11 ), verbundenen Außenrohr ( 3 ), einem an dem Außenrohr ( 3 ) über eine abgerundete Umkehrkappe ( 6 ) unter Ausbildung einer Eintrittsöffnung ( 16 ) für das Heißgas ( 7 ) anschließenden und von dem Außenrohr ( 3 ) mit Abstand umschlossenen Innen- bzw. Eintrittsrohr ( 5 ) mit Einströmabschnitt ( 17 ) und einem mit dem Heizflächenrohr verbundenen Abströmabschnitt ( 18 ) und mit einem zwischen Außenrohr ( 3 ) und Innenrohr ( 5 ) angeordneten Kühlmittel - Leitrohr ( 4 ), das sich bis in die Nähe der Umkehrkappe ( 6 ) erstreckt, **dadurch gekennzeichnet, dass**
der Einströmabschnitt ( 17 ) und zumindest ein Teil des Abströmabschnittes ( 18 ) des Eintrittsrohres ( 5 ) konisch ausgebildet ist, wobei die Konizität weniger als 2° beträgt und der lichte Querschnitt des konischen Bereiches ( 19 ) des Eintrittsrohres ( 5 ) sich in Richtung des Abströmabschnittes ( 18 ) hin verringert,
die Länge ( L ) des konischen Bereiches ( 19 ) wenigstens das 4-fache des Innendurchmessers ( d ) des Eintrittrohres ( 5 ) beträgt
und der konische Bereich ( 19 ) des Eintrittsrohres ( 5 ) mit wenigstens zwei unterschiedlichen Konizitäten ausgebildet ist.

2. Vorrichtung nach Anspruch 1, **dadurch gekennzeichnet, dass** die Konizität weniger als 1° beträgt.

3. Vorrichtung nach Anspruch 1 oder 2, **dadurch gekennzeichnet, dass** der konische Bereich ( 19 ) des Eintrittsrohres ( 5 ) in Strömungsrichtung des Heißgases ( 7 ) gesehen im stromaufwärtigen Bereich ( 20 ) eine geringere Konizität aufweist als im stromabwärtigen Bereich ( 21 ).

4. Vorrichtung nach einem der Ansprüche 1 bis 3, **dadurch gekennzeichnet, dass** der restliche Teil des Abströmabschnittes ( 18 ) zylindrisch ausgebildet ist.

5. Vorrichtung nach einem der Ansprüche 1 bis 4, **dadurch gekennzeichnet, dass** die Gaseintrittsöffnung ( 16 ) des Eintrittrohres ( 5 ) torus- bzw. trompetenförmig aufgeweitet ist.

6. Vorrichtung nach einem der Ansprüche 1 bis 5, **dadurch gekennzeichnet, dass** die gasseitige Wandoberfläche der Umkehrkappe ( 6 ), die gasseitige Wandoberfläche des Einströmabschnittes ( 17 ) und/oder des Abströmabschnittes ( 18 ) des Eintrittsrohres ( 5 ) mit einer verschleiß- und korrosionsbeständigen Keramikbeschichtung oder einer Diffusionsbeschichtung oder einer Plattierung ausgebildet ist.

7. Vorrichtung nach einem der Ansprüche 1 bis 6, **dadurch gekennzeichnet, dass** die Umkehrkappe ( 6 ) und/oder das Eintrittsrohr ( 5 ) in geschmiedeter oder gegossener Ausführung ausgebildet ist bzw. sind.

## Claims

1. Apparatus (1) for introducing hot gas into a heating surface tube of a waste heat boiler having an outer tube (3) connected to the boiler wall, in particular to the tube plate (11), and having an inner or inlet tube (5) that is connected to the outer tube (3) by means of a rounded reversing cap (6) to form an inlet port (16) for the hot gas (7), which inner tube is surrounded by the outer tube (3) at a distance and has an inflow section (17) and an outflow section (18) connected to the heating surface tube, and further having a coolant transport tube (4) that is arranged between the outer tube (3) and the inner tube (5) and extends to the vicinity of the reversing cap (6), **characterized in that** the inflow section (17) and at least part of the outflow section (18) of the inlet tube (5) are conical in design, wherein the taper is less than 2° and the cross-section of the conical region (19) of the inlet tube (5) becomes smaller as it approaches the outflow section (18),
the length (L) of the conical region (19) is at least four times the inner diameter (d) of the inlet tube (5)
and the conical region (19) of the inlet tube (5) is designed with at least two different tapers.

2. Apparatus according to claim 1, **characterized in that** the taper is less than 1 °.

3. Apparatus according to claim 1 or 2, **characterized in that** the conical region (19) of the inlet tube (5), viewed in the direction of the flow of the hot gas (7), has a smaller taper in the upstream region (20) than in the downstream region (21).

4. Apparatus according to one of claims 1 through 3, **characterized in that** the remaining part of the outflow section (18) is cylindrical in design.

5. Apparatus according to one of claims 1 through 4, **characterized in that** the gas inlet port (16) of the inlet tube (5) is flared in a torus or trumpet shape.

6. Apparatus according to one of claims 1 through 5, **characterized in that** the gas-side wall surface of the reversing cap (6), the gas-side wall surface of the inflow section (17) and/or outflow section (18) of the inlet tube (5) is designed with a wear-resistant and corrosion-resistant ceramic coating or a diffusion coating or a cladding.

7. Apparatus according to one of claims 1 through 6, **characterized in that** the reversing cap (6) and/or the inlet tube (5) is or are designed in a forged or cast construction.

## Revendications

1. Dispositif (1) pour l'introduction de gaz chaud dans un tuyau à surface chauffante d'une chaudière à récupération comprenant un tuyau extérieur (3) relié à la paroi de chaudière, en particulier au fond tubulaire (11), un tuyau intérieur respectivement d'entrée (5) faisant suite au tuyau extérieur (3) au moyen d'un capuchon réversible (6) arrondi en formant une ouverture d'entrée (16) pour le gaz chaud (7) et enfermé à distance par le tuyau extérieur (3), avec un tronçon d'admission (17) et un tronçon d'évacuation (18) relié au tuyau à surface chauffante et avec un tuyau conducteur de réfrigérant (4) disposé entre le tuyau extérieur (3) et le tuyau intérieur (5), qui s'étend jusqu'à proximité du capuchon réversible (6), **caractérisé en ce que**
le tronçon d'admission (17) et au moins une partie du tronçon d'évacuation (18) du tuyau d'entrée (5) sont conçus avec une forme conique, la conicité étant inférieure à 2° et la section intérieure de la zone (19) conique du tuyau d'entrée (5) diminuant en direction du tronçon d'évacuation (18), la longueur (L) de la zone (19) conique représente au moins quatre fois le diamètre intérieur (d) du tuyau d'entrée (5) et la zone (19) conique du tuyau d'entrée (5) est conçue avec au moins deux conicités différentes.

2. Dispositif selon la revendication 1, **caractérisé en ce que** la conicité est inférieure à 1°.

3. Dispositif selon la revendication 1 ou 2, **caractérisé en ce que** la zone (19) conique du tuyau d'entrée (5) présente, vu dans le sens d'écoulement du gaz chaud (7), dans la zone (20) en amont une conicité plus faible que dans la zone (21) en aval.

4. Dispositif selon l'une quelconque des revendications 1 à 3, **caractérisé en ce que** la partie restante du tronçon d'évacuation (18) est conçue avec une forme cylindrique.

5. Dispositif selon l'une quelconque des revendications 1 à 4, **caractérisé en ce que** l'ouverture d'entrée de gaz (16) du tuyau d'entrée (5) est élargie en forme de tore ou de trompette.

6. Dispositif selon l'une quelconque des revendications 1 à 5**, caractérisé en ce que** la surface de paroi côté gaz du capuchon réversible (6), la surface de paroi côté gaz du tronçon d'admission (17) et/ou du tronçon d'évacuation (18) du tuyau d'entrée (5) sont conçues avec un revêtement céramique résistant à l'usure et à la corrosion ou un revêtement de diffusion ou un plaquage.

7. Dispositif selon l'une quelconque des revendications 1 à 6, **caractérisé en ce que** le capuchon réversible (6) et/ou le tuyau d'entrée (5) est ou/sont conçu(s) dans une version forgée ou coulée.
